# EUROPÄISCHE PATENTSCHRIFT

(11) **EP 2 636 546 B1**
(45) Veröffentlichungstag und Bekanntmachung des Hinweises auf die Patenterteilung: **28.10.2015**
(21) Anmeldenummer: 13000888.1
(22) Anmeldetag: 22.02.2013
(51) Int. Cl.: B60D 1/24, B60D 1/54, B60D 1/62

(54) **Kupplungssteuervorrichtung und damit ausgestattete Anhängekupplung**
Control device for a coupling and trailer coupling fitted with the same
Dispositif de commande d'accouplement et attelage doté de celui-ci

(30) Priorität: 07.03.2012 DE 102012004345
(43) Veröffentlichungstag der Anmeldung: 11.09.2013
(73) Patentinhaber: WESTFALIA - Automotive GmbH, 33378 Rheda-Wiedenbrück (DE)
(72) Erfinder: Beutin, Jörg, D-33334 Gütersloh (DE); Röscheisen, Daniel, D-33378 Rheda-Wiedenbrück (DE)
(74) Vertreter: Patentanwälte Bregenzer und Reule Partnerschaftsgesellschaft mbB

(56) Entgegenhaltungen:
- EP-A1- 1 634 729
- EP-A2- 1 225 068
- EP-A2- 1 225 069
- WO-A1-03/072375

## Beschreibung

Die Erfindung betrifft eine Kupplungssteuervorrichtung zur Steuerung einer Antriebsanordnung einer Anhängekupplung für ein Fahrzeuge gemäß dem Oberbegriff des Anspruchs 1.

Kupplungssteuervorrichtungen dieser Art sind beispielsweise als Steuergeräte für Anhängekupplungen bekannt. Es gibt Kupplungssteuervorrichtung, die im Innenraum des Fahrzeugs, beispielsweise eines Personenkraftfahrzeugs, angeordnet sind und von deren Motor-Ausgangsanschlussanordnung elektrische Leitungen zu dem Antriebsmotor im Außenbereich des Kraftfahrzeugs führen. Der Antriebsmotor ist beispielsweise ein Entriegelungsantrieb, mit dem das Kuppelelement oder der Kuppelträger entriegelt und zu einer Bewegung freigegeben werden kann, zum Beispiel zur Verstellung in Richtung einer Nichtgebrauchsstellung hinter einen Stoßfänger des Fahrzeugs zurück.

Es sind mittlerweile Steuergeräte üblich, die für einen einzigen Antriebsmotor der Anhängekupplung, beispielsweise den oben genannten Entriegelungsantrieb, vorgesehen sind. Derartige Steuergeräte sind schon im Serieneinsatz und entsprechend geprüft und zertifiziert. Es ist jedoch nicht möglich, mit einem Steuergerät an Bord des Fahrzeugs, das nur für einen einzigen Antriebsmotor der Anhängekupplung geeignete Einzelmotor-Lastausgangsanschlüsse hat, eine Anhängekupplung zu betreiben, bei der mehrere Antriebsmotoren vorhanden sind, beispielsweise ein erster Antriebsmotor zur Entriegelung und ein zweiter Antriebsmotor zur Verstellung des Kuppelelements zwischen einer Gebrauchsstellung und Nichtgebrauchsstellung. In einem solchen Fall sind weitere Einzelmotor-Lastausgangsanschlüsse notwendig, über die dann mindestens ein weiterer, zum Beispiel zweiter, Antriebsmotor der Antriebsmotoranordnung der Anhängekupplung ansteuerbar und mit Strom versorgbar ist.

Der Oberbegriff des Anspruchs 1 ist in EP 1 225 069 A2 gezeigt.

Es ist daher die Aufgabe der vorliegenden Erfindung, eine Kupplungssteuervorrichtung bereitzustellen, bei der möglichst wenig Leitungsverbindungen zu einem Bordnetz des Fahrzeugs nötig sind.

Zur Lösung der Aufgabe ist bei Kupplungssteuervorrichtung der eingangs genannten Art vorgesehen, dass die Motor-Ausgangslastanschlussanordnung erste und zweite elektrische Lastausgangsanschlüsse zum Anschluss eines ersten und eines zweiten elektrischen Antriebsmotors der Antriebsanordnung der Anhängekupplung an die Kupplungssteuervorrichtung umfasst, und dass sie Schaltmittel zur simultanen und/oder sequentiellen elektrischen Verbindung der ersten und der zweiten elektrischen Lastausgangsanschlüsse mit den Einzelmotor-Lasteingangsanschlüssen aufweist.

Es ist ein Grundgedanke der vorliegenden Erfindung, dass die Kupplungssteuervorrichtung über ihre Einzelmotor-Lasteingangsanschlüsse mit Strom versorgbar und steuerbar ist, so dass beispielsweise ein an Bord des Fahrzeugs befindliches Fahrzeug-Steuergerät den Stromfluss zu den Motor-Lasteingangsanschlüssen der erfindungsgemäßen Kupplungssteuervorrichtung überwacht und steuert und so beispielsweise Bewegungsabläufe der Antriebsanordnung der Anhängekupplung steuern und/oder überwachen kann. Somit können beispielsweise die beim Fahrzeug-Steuergerät ohnehin vorhandenen Kontroll- und Steuermittel weitergenutzt werden, die schon geprüft sind, beispielsweise hinsichtlich ihrer Kompatibilität mit den übrigen Steuer- und Überwachungskomponenten des Bordnetzes des Fahrzeugs. Das Fahrzeug-Steuergerät braucht also nicht überarbeitet zu werden, zum Beispiel um weitere Einzelmotor-Lastausgangsanschlüsse ergänzt zu werden, was umfangreiche Modifikationen nach sich ziehen würde.

Darüber hinaus ergibt sich erfindungsgemäß eine sehr einfache Verkabelung und Leitungsführung, da nämlich zwischen dem Bordnetz und der erfindungsgemäßen Kupplungssteuervorrichtung lediglich die Leitungen zu den Einzelmotor-Lasteingangsanschlüssen verlegt werden müssen und die Kupplungssteuervorrichtung sozusagen dann die weitere Arbeit erledigt, nämlich die Ansteuerung des ersten und des zweiten Antriebsmotors.

An dieser Stelle ist zu erwähnen, dass selbstverständlich auch ein dritter oder weitere Antriebsmotoren von einer erfindungsgemäßen Kupplungssteuervorrichtung ansteuerbar ist, d.h. dass dann beispielsweise dritte oder weitere Motor-Lastausgangsanschlüsse zur Ansteuerung eines dritten oder weiterer Antriebsmotoren der Antriebsanordnung der Anhängekupplung vorhanden sind, die über die Einzelmotor-Lasteingangsanschlüsse mit elektrischer Energie versorgbar sind. Die Schaltmittel sind dann entsprechend angepasst oder erweitert, so dass sie auch die weiteren Motor-Lastausgangsanschlüsse entsprechend ansteuern und mit elektrischer Energie versorgen können.

Über die Einzelmotor-Lasteingangsanschlüsse ist die erfindungsgemäße Kupplungssteuervorrichtung zweckmäßigerweise steuerbar, d.h. dass beispielsweise das Fahrzeug-Steuergerät über die Stromhöhe und/oder die bereitgestellte Versorgungsspannung an den Einzelmotor-Lasteingangsanschlüssen Einfluss auf die Funktion der Kupplungssteuervorrichtung hat, beispielsweise auf eine Drehzahl eines jeweiligen Antriebsmotors, der über die Einzelmotor-Lasteingangsanschlüsse Strom bezieht. In der bevorzugten Ausführungsform bilden die als Motor-Lasteingangs Anschlüsse also nicht nur Energieversorgungsanschlüsse zur elektrischen Energieversorgung der Kupplungssteuervorrichtung.

Der erste Antriebsmotor bildet zweckmäßigerweise einen Bestandteil einer Verriegelungseinrichtung zum Verriegeln des Kuppelträgers in zumindest einer Stellung, zum Beispiel einer Gebrauchsstellung, die zum Ankuppeln eines Anhängers vorgesehen ist. Durch den ersten Antriebsmotor ist die Verriegelungseinrichtung beispielsweise in eine Verriegelungsstellung, in der das Kupplungselement ortsfest festgehalten ist, oder eine Entriegelungsstellung verstellbar, in der das Kupplungselement verstellbar ist, zum Beispiel zwischen einer Gebrauchsstellung und einer Nichtgebrauchsstellung.

Der zweite Antriebsmotor ist zweckmäßigerweise als ein Stellantrieb ausgestaltet, d.h. er dient zum Verstellen des Kuppelelements zwischen einer zum Anhängen des Anhängers vorgesehenen Gebrauchsstellung und einer Nichtgebrauchsstellung, in der das Kuppelelement weniger weit vor ein Heck des Fahrzeugs vorsteht als in der Gebrauchsstellung. In der Nichtgebrauchsstellung ist das Kuppelelement beispielsweise unter einem Stoßfänger des Fahrzeugs im Wesentlichen verborgen gegen Sicht von hinten oben.

Die Schaltmittel können beispielsweise sequenziell zunächst die ersten elektrischen Lastausgangsanschlüsse mit den Einzelmotor-Lasteingangsanschlüssen und anschließend die zweiten elektrischen Lastausgangsanschlüsse mit den Einzelmotor-Lasteingangsanschlüssen verbinden, so dass beispielsweise zunächst der erste Antriebsmotor die Anhängekupplung entriegelt, so dass das Kupplungselement verstellbar ist. Die solchermaßen entriegelte Anhängekupplung kann dann vom zweiten Antriebsmotor, der beispielsweise einen Schwenkantrieb und/oder einen Schiebeantrieb umfasst, von einer Gebrauchsstellung, die zum Anhängen eines Anhängers vorgesehen ist, in eine Nichtgebrauchsstellung hinter einen Stoßfänger des Kraftfahrzeugs oder an einen anderen gegen Sicht geschützteren Ort oder umgekehrt verstellt werden. Beispielsweise bleibt eine Verriegelungseinrichtung der Anhängekupplung aufgrund einer Ausgestaltung von Formschlusselementen in der Entriegelungsstellung, bis die jeweils andere Stellung, zum Beispiel Gebrauchsstellung oder die Nichtgebrauchsstellung, von der Anhängekupplung erreicht ist. Der erste Antriebsmotor kann also während der Bewegungsphase des zweiten Antriebsmotors unbestromt bleiben.

Es aber auch eine solche Anordnung möglich und zweckmäßig, bei der die Schaltmittel zur Verbindung der ersten elektrischen Lastausgangsanschlüsse und der zweiten elektrischen Lastausgangsanschlüsse mit den Einzelmotor-Lasteingangsanschlüssen in einer Abfolge ausgestaltet sind, bei der in einer ersten Phase zunächst die ersten elektrischen Lastausgangsanschlüsse mit den Einzelmotor-Lasteingangsanschlüsse verbunden sind, d.h. die zweiten, dem zweiten Antriebsmotor zugeordneten Lastausgangsanschlüsse noch unbestromt sind, während in einer zweiten Phase sowohl die ersten als auch die zweiten Lastausgangsanschlüsse mit den Lasteingangsanschlüssen verbunden sind, so dass beispielsweise der als Entriegelungsantrieb ausgestaltete erste Antriebsmotor die Entriegelung aufrechterhält, während der zweite Antriebsmotor die Anhängekupplung bzw. deren Kuppelelement und/oder Kuppelträger verstellt.

An diese Steuerungs- oder Bewegungsabfolge kann sich optional auch eine dritte Phase anschließen, bei der die Schaltmittel nur die zweiten elektrischen Lastausgangsanschlüsse mit den Einzelmotor-Lasteingangsanschlüssen verbinden, so dass beispielsweise nur ein Schwenkantrieb für den Kuppelträger, insbesondere einen Kupplungsarm, als zweiter Antriebsmotor bestromt wird, während der erste Antriebsmotor, der zuvor die Entriegelung bewirkt hat, unbestromt bleibt. Beispielsweise kann dann eine Feder auf ein Verriegelungselement der Verriegelungseinrichtung einwirken, um diese in Richtung der Verriegelungsstellung zu betätigen. Wenn jedoch dieses Verriegelungselement oder durch das Verriegelungselement betätigbare Formschlusselemente an einer Gegenkontur entlang gleiten, während der zweite Antriebsmotor tätig ist, können Sie die Anhängekupplung nicht verriegeln. Der erste Antriebsmotor, der als Entriegelungsmotor arbeitet, muss dann nicht mit elektrischer Energie versorgt werden.

Zu einer gleichzeitigen Bestromung mehrerer Lastausgangsanschlüsse für mehrere Antriebsmotoren, zum Beispiel 2 Antriebsmotoren der Antriebsanordnung der Anhängekupplung, eignen sich beispielsweise Schalterkaskaden, ein Stufenschalter, eine geeignete Leistungselektronik, zum Beispiel eine Endstufe, oder dergleichen.

Die Schaltmittel umfassen zweckmäßigerweise einen Umschalter zur sequenziellen Verbindung der ersten elektrischen Lastausgangsanschlüsse und der zweiten elektrischen Lastausgangsanschlüsse mit den Einzelmotor-Lasteingangsanschlüssen, so dass der erste und der zweite Antriebsmotor nacheinander mit den Einzelmotor-Lasteingangsanschlüssen verbunden sind. Bei diesem Umschalter kann es sich beispielsweise um ein Relais, eine Leistungselektronik oder dergleichen handeln.

Eine bevorzugte Ausführungsform der Erfindung sieht einen Umschalter zur zweipoligen Verbindung der ersten und der zweiten elektrischen Lastausgangsanschlüsse jeweils mit den Einzelmotor-Lasteingangsanschlüssen vor. Der Umschalter kann elektromechanische und/oder elektronisch sein. Der Umschalter kann beispielsweise mechanisch ansteuerbar sein, beispielsweise durch ein Verriegelungsbauteil einer Verriegelungseinrichtung, die durch den ersten Antriebsmotor angetrieben wird.

Die Schaltmittel umfassen zweckmäßigerweise mindestens einen Steuereingang und/oder mindestens einen Sensorschalter, über die in die Schaltmittel zum Schalten der Verbindung zwischen den Einzelmotor-Lasteingangsanschlüssen und den ersten elektrischen Lastausgangsanschlüssen und den zweiten elektrischen Lastausgangsanschlüssen schaltbar sind. Über diesen Steuereingang kann beispielsweise eine Steuerleitung des Fahrzeug-Steuergeräts auf die Kupplungssteuervorrichtung steuernd einwirken, so dass die Kupplungssteuervorrichtung gemäß der Erfindung dann beispielsweise zunächst den ersten Antriebsmotor und dann den zweiten Antriebsmotor ansteuert oder auch die beiden Antriebsmotoren gleichzeitig betätigt.

Der mindestens eine Sensorschalter kann beispielsweise durch den ersten oder zweiten Antriebsmotor oder ein durch den jeweiligen Antriebsmotor betätigtes Bauteil schaltbar sein. Der Sensorschalter kann beispielsweise einen induktiven Schalter, einen kapazitiven Schalter oder auch einen elektrischen Schalter, insbesondere einen Kontaktschalter, umfassen. Der mindestens eine Sensorschalter kann auch einen Bestandteil des ersten oder des zweiten Antriebsmotors bilden. Selbstverständlich können bei beiden Antriebsmotoren jeweils Sensorschalter vorgesehen sein, die zum Schalten der Schaltmittel bzw. zum Ansteuern der Schaltmittel geeignet sind.

Die Kupplungssteuervorrichtung weist zweckmäßigerweise Simulationsmittel zur Simulation einer elektrischen Last, die von der durch den ersten und den zweiten Antriebsmotor verursachten Last abweicht, auf, wobei diese Last an den Einzelmotor-Lasteingangsanschlüssen simuliert wird. Somit ist wird also für beispielsweise das fahrzeugseitige Steuergerät ein Verhalten eines einzigen Antriebsmotors simuliert, obwohl physikalisch von der Kupplungssteuervorrichtung gemäß der Erfindung zwei Antriebsmotoren angesteuert werden.

Eine weitere vorteilhafte Ausführungsform der Erfindung sieht vor, dass die Kupplungssteuervorrichtung einen elektrischen Pufferspeicher zur elektrischen Stromversorgung der ersten oder zweiten, dem ersten und zweiten Antriebsmotor zugeordneten Lastausgangsanschlüsse aufweist, während die jeweils anderen, das heißt die zweiten Lastausgangsanschlüsse beziehungsweise die ersten Lastausgangsanschlüsse, mit den Einzelmotor-Lasteingangsanschlüssen verbunden sind. Wenn also an sich beispielsweise die zweiten Lastausgangsanschlüsse stromlos sind, weil die ersten Lastausgangsanschlüsse momentan mit den Einzelmotor-Lastausgangsanschlüssen verbunden sind, können diese zweiten Lastausgangsanschlüsse über den elektrischen Pufferspeicher bestromt werden, so dass der zweite Antriebsmotor arbeiten kann, während der erste Antriebsmotor von den Einzelmotor-Lasteingangsanschlüssen aktuell Strom bezieht.

Eine bevorzugte Ausführungsform der Erfindung sieht vor, dass die Kupplungssteuervorrichtung ein Schutzgehäuse zum Schutz gegenüber Umwelteinflüssen bei einer Anordnung in einem Außenbereich des Fahrzeugs aufweist. Somit kann also die Kupplungssteuervorrichtung mit dem Schutzgehäuse im Außenbereich angeordnet werden, wobei die empfindlichen elektrischen Komponenten oder elektronischen Komponenten geschützt sind.

Das Schutzgehäuse kann beispielsweise vom ersten oder zweiten Antriebsmotor bereitgestellt worden, in dessen Gehäuse die Kupplungssteuervorrichtung bei einer weiteren bevorzugten Ausführung von der Erfindung integriert ist. Bevorzugt ist nämlich vorgesehen, dass die Kupplungssteuervorrichtung einen Bestandteil mindestens eines Antriebsmotors, zum Beispiel des Ersten Antriebsmotors oder des zweiten Antriebsmotors, bildet. Bevorzugt bildet die Kupplungssteuervorrichtung einen Bestandteil eines Entriegelung-Antriebsmotors.

Der erste und der zweite Antriebsmotor sind zweckmäßigerweise in einem gemeinsamen Gehäuse angeordnet. Somit ist quasi ein Motor-in-Motor-Konzept realisiert. In diesem Gehäuse ist zweckmäßigerweise auch die Kupplungssteuervorrichtung vorhanden.

Bevorzugt bildet die Kupplungsvorrichtung einen Bestandteil einer Anhängekupplung. Die Anhängekupplung umfasst zweckmäßigerweise das vorgenannte Kuppelelement, dass an einem Kuppelträger angeordnet ist. Insbesondere ist es zweckmäßig, wenn die Anhängekupplung die Antriebsmotoranordnung umfasst. Vorteilhaft ist der Kuppelträger mittels einer Lageranordnung, beispielsweise einer Schwenklageranordnung und/oder einer Schiebelageranordnung zwischen der Gebrauchsstellung und der Nichtgebrauchsstellung schwenkbar und/oder verschieblich an einer am Fahrzeug zu befestigenden Halterung gelagert.

Die erfindungsgemäße Kupplungssteuervorrichtung, insbesondere die mit der Kupplungssteuervorrichtung ausgestattete Anhängekupplung, bildet zweckmäßigerweise einen Bestandteil eines Systems, das auch das Fahrzeug-Steuergerät umfasst. Das Fahrzeug-Steuergerät umfasst bei dieser Ausgestaltung vorteilhaft eine Stromüberwachungseinrichtung zur Überwachung eines Stromflusses zu den Einzelmotor-Lasteingangsanschlüssen. Die Stromüberwachungseinrichtung weist beispielsweise einen Speicher auf, in dem Stromfluss-Kennwerte und/oder mindestens eine Stromfluss-Kennlinie für einen Stromfluss zu Einzelmotor-Lastausgangsanschlüssen des Fahrzeug-Steuergeräts bzw. zu den Einzelmotor-Lasteingangsanschlüssen der erfindungsgemäßen Kupplungssteuervorrichtung gespeichert sind. Die Kennwerte oder die Kennlinien repräsentieren beispielsweise ein Stromverlauf, der ausgangsseitig am Fahrzeug-Steuergerät üblicherweise vorhanden ist, wenn die erfindungsgemäße Kupplungssteuervorrichtung den ersten und zweiten (oder weitere Antriebsmotoren) der Anhängekupplung ansteuert.

Wenn also beispielsweise zunächst der erste Antriebsmotor läuft und dann der zweite Antriebsmotor zugeschaltet wird, steigt der Stromfluss am Ausgang des Fahrzeug-Steuergeräts entsprechend an, was das Fahrzeug-Steuergerät beispielsweise durch Vergleich des Stromflusses mit einer gespeicherten Kennlinie als richtig erkennt. Wenn jedoch beispielsweise nach einer bestimmten Zeitspanne nach Einschalten des ersten Antriebsmotors der Stromfluss nicht ansteigt, liegt eine Betriebsstörung vor. Diese Erläuterungen sind jedoch nur beispielhaft zu verstehen. Nachfolgend wird ein Ausführungsbeispiel der Erfindung anhand der Zeichnung erläutert. Es zeigen:
- Figur 1: eine Anhängekupplung von schräg hinten unten in Gebrauchsstellung,
- Figur 2: einen Kuppelträger der Anhängekupplung gemäß Figur 1 in einer Nichtgebrauchsstellung,
- Figur 3: ein Schaltbild einer Kupplungssteuervorrichtung der Anhängekupplung nach Figur 1, und
- Figur 4: eine schematische Ansicht einer weiteren Kupplungssteuervorrichtung als Baueinheit mit zwei Antriebsmotoren.

Eine Anhängekupplung 10 ist beispielsweise an einem hinteren Querträger 91 eines Fahrzeugs 90, z.B. eines Personen-Kraftfahrzeugs, befestigt. Eine Halterung 11 der Anhängekupplung 10 umfasst hier nicht näher beschriebene Halteelemente 12, 13, die am hinteren Querträger 91 befestigt sind, beispielsweise angeschweißt oder angeschraubt. Die Halterung 11 umfasst ferner eine Lageranordnung 14, die beispielsweise ein Kugellager 20 oder ein in der Art eines Kugellager funktionierendes Lager umfasst. Beispielsweise umfasst die Lageranordnung 14 ein mit der Halterung 11 verbundenes, quasi fahrzeugseitiges Lagerteil 15, das in eine Lageraufnahme 16 eines Lagerteils 17 eingreift. Das Lagerteil 17 trägt einen Kuppelträger 18, der vom Lagerteil 17 absteht. Der Kuppelträger 18 ist z.B. ein Kupplungsarm. Das fahrzeugseitige Lagerteil 15 ist beispielsweise außenseitig kugelig, während die Lageraufnahme 16 in der Art einer Hohlkugel ausgestaltet ist.

Darauf kommt es jedoch nicht an. Es versteht sich nämlich, dass auch andere Lagerkonzepte, beispielsweise Schwenk-Schiebelager, reine Drehlager, kardanische Lagerungen oder dergleichen ohne weiteres möglich sind.

Der Kuppelträger 18 trägt an seinem freien, vom Lagerteil 17 entfernten Endbereich ein Kuppelelement 19, beispielsweise eine Kupplungskugel, zum Ankuppeln einer Kupplung 81 eines Anhängers 80, von der beispielhaft ein Kupplungsmaul 82 dargestellt ist. Es versteht sich, dass auch andersartige Kuppelelemente, zum Beispiel polygonale Kuppelelemente, möglich sind.

Der Kuppelträger 18 kann mittels der Lageranordnung 14 zwischen einer Gebrauchsstellung G über mehrere Zwischenstellungen, von denen exemplarisch eine Zwischenstellung Z1 dargestellt ist, in eine Nichtgebrauchsstellung N verstellt werden, bei der sich der Kuppelträger 18 im Wesentlichen verdeckt nahe beim Fahrzeug 90, insbesondere dessen Karosserie, befindet. Beispielsweise ist der Kuppelträger 18 in der Nichtgebrauchsstellung N hinter einen Stoßfänger 94 des Fahrzeugs 90 zurück verstellt, so dass er von hinten oben nicht sichtbar ist.

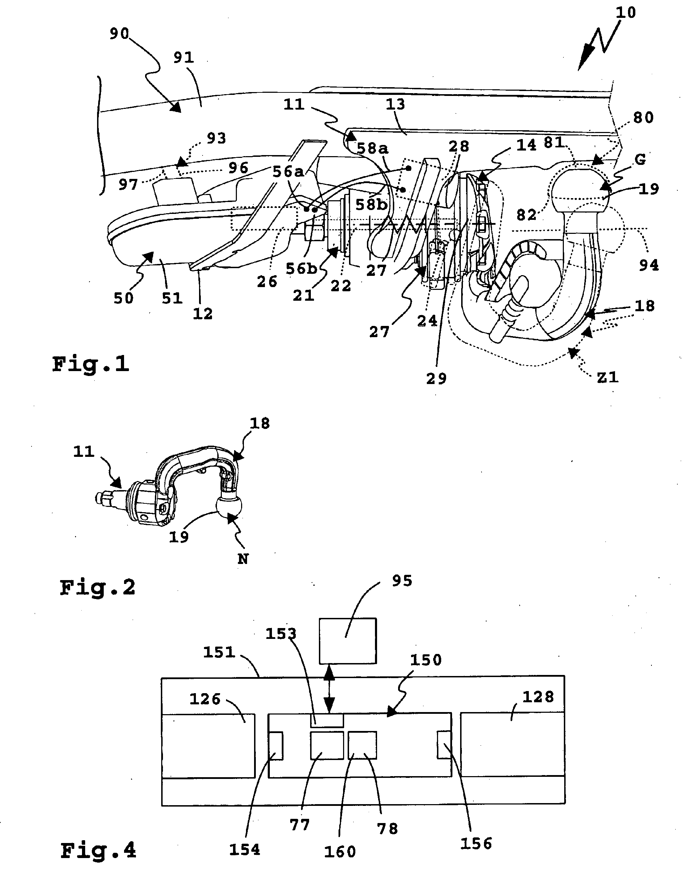

Der Kuppelträger 18 kann mittels einer Verriegelungseinrichtung 21 in seiner Gebrauchsstellung G und der Nichtgebrauchsstellung N verriegelt werden. Beispielsweise greift ein Verriegelungselement 22, zum Beispiel ein Verriegelungsbolzen, in einer Verriegelungsstellung , die in Figur 4 dargestellt ist, in eine Verriegelungsaufnahme oder Verriegelungsöffnung 23 am Lagerteil 17 ein oder beaufschlagt Formstücke 24, zum Beispiel Kugeln, so, dass sie in eine oder mehrere Verriegelungsöffnungen 23 am Lagerteil 17 eingreifen. Selbstverständlich wäre auch eine Verriegelung vom Kuppelträger her möglich, das heißt dass beispielsweise am oder im Kuppelträger oder dessen Lagerteil eines oder mehrere bewegliche Verriegelungselemente gelagert sind, die den Kuppelträger relativ zum fahrzeugseitigen Halter verriegeln können.

Das Verriegelungselement 22 ist durch eine Feder 25 in die Verriegelungsstellung beaufschlagt. Ein in Figur 1 von außen sichtbarer erster Antriebsmotor 26 kann das Verriegelungselement 22 in Richtung der Entriegelungsstellung antreiben, entgegen der Kraft der Feder 25, und/oder in Richtung der Verriegelungsstellung. Der Antriebsmotor 26 kann auch als ein Entriegelungsantrieb bezeichnet werden.

Weiterhin umfasst die Anhängekupplung 10 eine Positionierantriebsanordnung 27 mit einem zweiten Antriebsmotor 28, zum Beispiel einem Stellantrieb. Die Positionierantriebsanordnung 27 kann auch weitere Motoren, ein Getriebe, zum Beispiel ein Seilzug-Getriebe 29, oder dergleichen umfassen. Jedenfalls ist es möglich, den Kuppelträger 18 mit dem zweiten Antriebsmotor 28 zwischen der Gebrauchsstellung G und der Nichtgebrauchsstellung N zu verstellen.

Die Antriebsmotoren 26 und 28 bilden Bestandteile einer Antriebsanordnung der Anhängekupplung 10, mit der diese entriegelt und verstellt werden kann.

Ein Bordnetz 93 des Fahrzeugs 90 umfasst ein Fahrzeug-Steuergerät 95, das zur Ansteuerung der Anhängekupplung 10 ausgestaltet ist, allerdings insoweit nur eingeschränkt, als von dem Bordnetz 93 nur Leitungen 96 und 97 zur Stromübertragung und Ansteuerung eines einzigen Antriebsmotors einer Anhängekupplung bereitstehen. Das Fahrzeug-Steuergerät 95 hat Einzelmotor-Lastausgangsanschlüsse 103, an deren Einzel-Lastausgangsanschlüssen 103a und 103b die Leitungen 96 und 97 angeschlossen sind, über die ein Strom zum Betreiben eines einzelnen Antriebsmotors fließen kann. Zudem hat das Fahrzeug-Steuergerät 95 noch einen Meldeeingang 98, über den eine korrekte Verriegelung der Anhängekupplung 10 sind realisierbar ist sowie einen Meldeeingang 98, über den ein Meldesignal zur Anzeige einer nicht vorhandenen Verriegelung bzw. Entriegelung der Anhängekupplung 10 an das Fahrzeug-Steuergerät 95 meldbar ist.

Das Bordnetz 93, insbesondere das Fahrzeug-Steuergerät 95 stellt noch eine Masse-Leitung 100 zur Bereitstellung eines Massepotenzials bereit.

Trotz der eingeschränkten Funktionalität des Fahrzeug-Steuergeräts 95 und/oder der relativ wenigen Leitungen, die zwischen dem Fahrzeug-Steuergerät 95 bzw. dem Bordnetz 93 und der Kupplungssteuervorrichtung 50 vorhanden sind, ist es möglich, die beiden Antriebsmotoren 26 und 28 anhand der Kupplungssteuervorrichtung 50 optimal anzusteuern.

Die Kupplungssteuervorrichtung 50 ist vorzugsweise im Außenbereich des Fahrzeugs 90 angeordnet. Sie befindet sich in einem Schutzgehäuse 51 vollständig gegenüber Umwelteinflüssen gekapselt.

Die Kupplungssteuervorrichtung 50 umfasst eine Bordnetzschnittstelle 52 zum Anschluss an das Bordnetz 93 des Fahrzeugs 90. An die Bordnetzschnittstelle 52 können Leitungen, beispielsweise die beiden Motor-Leitungen 96,97 sowie zu den Meldeeingängen 98 und 99 führende Leitungen angeschlossen werden.

Die Motor-Leitungen 96 und 97 sind an Einzelmotor-Lasteingangsanschlüsse 53 angeschlossen, wobei deren Einzel-Lasteingangsanschlüsse mit 53a und 53b bezeichnet sind, z.B. Mot+ und Mot-, wobei die Polarität bei einer Richtungsumkehr eines Antriebsmotors auch anders sein kann.

Das Schutzgehäuse 51 bildet zugleich ein Motorgehäuse für den ersten Antriebsmotor 26, der in das Schutzgehäuse 51 integriert ist. Insofern sind Lastausgangsanschlüsse 54 einer Ausgangslastanschlussanordnung 55 der Kupplungssteuervorrichtung 50 an sich keine externen Lastausgangsanschlüsse, sondern umfassen interne Lastausgangsanschlüsse 54a und 54b, an die Leitungen 57a und 57b des Antriebsmotors 26 angeschlossen sind.

Der zweite Antriebsmotor 28 ist an Lastausgangsanschlüsse 56 mit Polen oder Einzel-Lastausgangsanschlüssen 56a und 56b angeschlossen, die jedoch beim Ausführungsbeispiel gemäß Figuren 1-3 sozusagen externe Lastausgangsanschlüsse darstellen. Die Lastausgangsanschlüsse 56 sind nämlich außen am Schutzgehäuse 51 zugänglich angeordnet. Der Antriebsmotor 28 ist von dem Antriebsmotor 26 bzw. der Kupplungssteuervorrichtung 50 separat, beispielsweise direkt an der Lageranordnung 14 angeordnet. Dennoch ist die Ansteuerung dieses zweiten Antriebsmotors 28 durch die Kupplungssteuervorrichtung 50 möglich.

An die Lastausgangsanschlüsse 56a und 56b sind Leitungen 58a und 58b, die zum zweiten Antriebsmotor 28 führen, angeschlossen. Vorzugsweise sind die Lastausgangsanschlüsse 56 elektrisch isoliert und gekapselt, so dass schädliche Umwelteinflüsse, Wasser oder dergleichen, nicht auf die elektrischen Kontakte und Verbindungen wirken können.

Die Kupplungssteuervorrichtung 50 umfasst Schaltmittel 60, beispielsweise einen Umschalter 61, die einerseits mit den Einzelmotor-Lasteingangsanschlüssen 53, andererseits mit den Lastausgangsanschlüssen 54 und 56 verbunden sind. Die Schaltmittel 60 umfassen beispielsweise Wechselschalter 62 und 63, die über ein Schaltglied 64 ansteuerbar sind. Beispielsweise sind die Wechselschalter 62 und 63 Bestandteile eines Relais, das den Umschalter 61 bildet. Die Wechselschalter 62 und 63 verbinden entweder den ersten Antriebsmotor 26 oder den zweiten Antriebsmotor 28 mit den Lasteingangsanschlüssen 53, sind also zum sequenziellen Schalten der Verbindung zwischen den eingangsseitigen Einzelmotor-Lasteingangsanschlüsse 53 und den ausgangsseitigen Motor-Lastausgangsanschlüsse 54 und 56 ausgestaltet.

Das Schaltglied 64 könnte auch durch den Antriebsmotor 26 und/oder das Verrieglungselement 22 direkt betätigbar sein, z.B. in der Art einer Schiebebewegung oder Druckbetätigung.

Somit kann also beispielsweise zunächst der Antriebsmotor 26 das Verriegelungselement 22 entgegen der Kraft der Feder 25 in Richtung der Entriegelungsstellung verstellen, wenn er über die Einzelmotor-Lasteingangsanschlüsse 53 mit elektrischem Strom versorgt wird.

Das in Richtung der Entriegelungsstellung verstellte Verriegelungselement 22 ist beispielsweise mit einem Sensorschalter 65 bewegungsgekoppelt, der beispielsweise einen elektrischen Schaltkontakt umfasst. Beispielsweise drückt das Verriegelungselement 22 den Sensorschalter 65 in eine Schließstellung, bei der eine Leitung 66 mit einem Versorgungspotenzial verbindet. Die Leitung 66 ist an einen Steuereingang 67 der Bordnetzschnittstelle 52 angeschlossen. Der Steuereingang 67 wiederum ist mit dem Schaltglied 64, beispielsweise einer elektrischen Spule des Schaltglieds 64, verbunden, so dass das Schaltglied 64 über den Steuereingang 67 aktivierbar ist, um die beiden Wechselschalter 62, 63 zu betätigen, was mit einem Pfeil 68 in der Zeichnung angedeutet ist.

Der Sensorschalter 65 könnte auch in dem Antriebsmotor 26 integriert sein.

Der Sensorschalter 65 ist über eine Leitung 69 mit einem Versorgungsanschluss 70 verbunden, über den das Bordnetz 93 beispielsweise eine Signalspannung oder Steuerspannung von 5V, 12V oder dergleichen einspeist, um elektrische Komponenten der Kupplungssteuervorrichtung 50 mit Strom zu versorgen. Das Steuergerät 95 stellt beispielsweise über einen Anschluss 104, an den der Versorgungsanschluss 70 der Bordnetzschnittstelle 52 über eine Leitung angeschlossen ist, die Versorgungsspannung bereit.

In gleicher Weise kann auch ein weiterer Schalter 71 durch die Verriegelungseinrichtung 21 betätigbar sein, wobei dieser Schalter 71, zum Beispiel ein Mikroschalter, auch eine Funktionsanzeige oder eine Signalanzeige umfassen kann, um seine jeweilige Stellung zu signalisieren.

Der Schalter 71 verbindet wahlweise einen Meldeausgang 72 zur Anzeige einer Verriegelungsstellung der Verriegelungseinrichtung 21 oder einen Meldeausgang 73 der Bordnetzschnittstelle 52 mit einem Massepotenzial, das an einem Masseeingang 74 der Bordnetzschnittstelle 52 bereit steht. Beispielsweise stellt das Fahrzeug-Steuergerät 95 das Massepotenzial für den Masseeingang 74 an einem Anschluss 104 bereit.

Wenn also ausgehend von einer Betätigung des Antriebsmotors 26 die Verriegelungseinrichtung 21 ihre Entriegelungsstellung erreicht, betätigt sie den Sensorschalter 65, der seinerseits wiederum das Schaltglied 64 aktiviert, worauf die Wechselschalter 62 und 63 die Leitungen 58a und 58b bzw. die Lastausgangsanschlüsse 56 mit den Lasteingangsanschlüssen 53 verbinden. Dann ist das Fahrzeug-Steuergerät 95 mit dem Antriebsmotor 28 elektrisch verbunden und kann diesen bestromen, so dass der Antriebsmotor 28 das Kuppelelement 19 bzw. den Kuppelträger 18 von der Gebrauchsstellung G in die Nichtgebrauchsstellung N und/oder umgekehrt verstellen kann.

Es versteht sich, dass die Anordnung auch so getroffen sein kann, dass die Schaltmittel 60 in einer Übergangsphase zwischen einer Bestromung des Antriebsmotors 26 und einer Bestromung des Antriebsmotors 28 beide Antriebsmotoren 26 und 28 bestromt, so dass beispielsweise der Antriebsmotor 26 die Verriegelungseinrichtung 21 in ihrer Entriegelungsstellung hält, bis durch ein Verstellen des Kuppelträgers 18 aus der Gebrauchsstellung G oder der Nichtgebrauchsstellung N heraus die Verriegelungselemente 22 von der jeweils zugeordneten Verriegelungsöffnung 23 soweit wegbewegt sind, zum Beispiel rotatorisch weg verstellt sind, dass sie trotz Beaufschlagung durch die Feder 25 nicht mehr selbsttätig in die Verriegelungsöffnungen 23 gelangen können. Dann schalten die Schaltmittel 60 sozusagen den Antriebsmotor 26 ab und bestromen lediglich noch den Antriebsmotor 28, bis dieser seine Verstellbewegung zur jeweiligen Endstellung (Gebrauchsstellung oder Nichtgebrauchsstellung) des Kuppelträgers 18 abgeschlossen hat.

Zu diesem Zweck könnten beispielsweise anstelle der Wechselschalter 62 und 63 Stufenschalter vorgesehen sein.

Weiterhin ist es denkbar, dass die Schaltmittel beispielsweise einen elektrischen Pufferspeicher 75 mit den Lastausgangsanschlüssen 54 für Antriebsmotor 26 verbinden, wenn die Lasteingangsanschlüsse 53 mit den Lastausgangsanschlüssen 56 für den Antriebsmotor 28 verbunden sind, so dass der Antriebsmotor 26 zur Aufrechterhaltung der Entriegelungsstellung der Verriegelungseinrichtung 21 weiter bestromt wird, obwohl das Fahrzeug-Steuergerät 95 bereits den Antriebsmotor 28 mit Strom versorgt.

Es ist auch möglich, dass Simulationsmittel 76 eine elektrische Last simulieren, die etwa einem einzigen Antriebsmotor entspricht. Dies können die Simulationsmittel 76 beispielsweise dadurch erreichen, dass sie den Pufferspeicher 75 zumindest für vorbestimmte Zeitabschnitte während einer Bestromung der Ahtriebsmotoren 26 oder 28 aufladen, was eine elektrische Last an den Einzelmotor-Lasteingangsanschlüssen 53 darstellt.

Zur Stromüberwachung eines Stromes, den das Fahrzeug-Steuergerät 95 an seinen Einzelmotor-Lastausgangsanschlüssen 103 bereitstellt, um die Antriebsmotoranordnung der Anhängekupplung 10 zu bestromen, ist zweckmäßigerweise eine Stromüberwachungseinrichtung 102 vorgesehen. In einem Speicher 105 der Stromüberwachungseinrichtung 102 sind beispielsweise Kennwerte 106 abgelegt, die einem Stromverlauf bei einer Bestromung der Antriebsmotoren 46 und 28 durch die Kupplungssteuervorrichtung 50 entsprechen. Somit kann also das Steuergerät 95 den Stromverlauf an seinen Lastausgangsanschlüssen 103 überwachen und auf diesem Wege überwachen und kontrollieren, ob die Anhängekupplung 10 korrekt arbeitet.

An dieser Stelle sei bemerkt, dass das Fahrzeug-Steuergerät 95 beispielsweise durch einen Mikroprozessor gesteuert sein kann, der dann in der Lage ist, den Speicher 105 auszulesen.

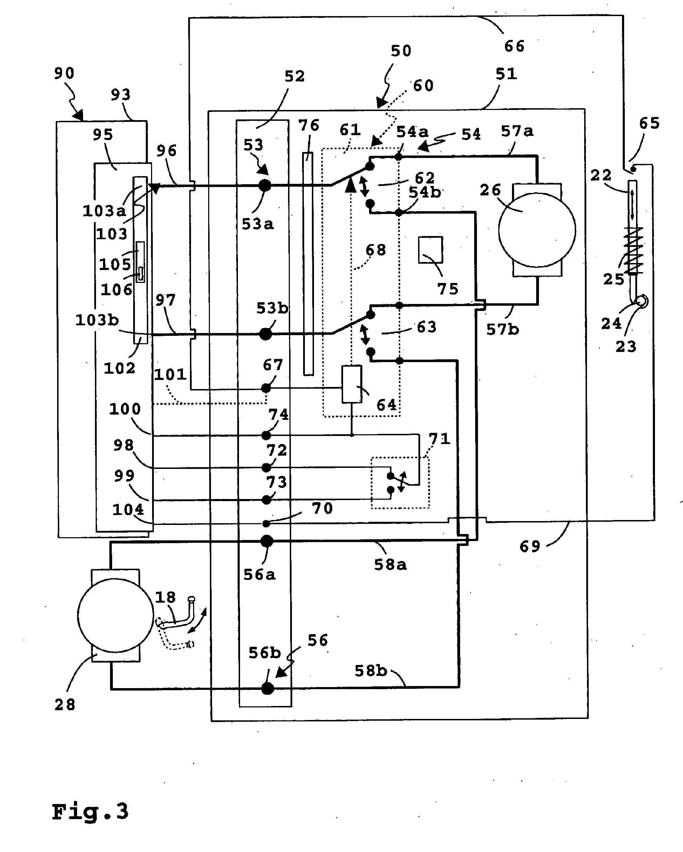

Auch die Kupplungssteuervorrichtung 50 kann zwar in einer in Figur 3 angedeuteten Ausführungsform eine elektromechanische Steuerung sein, aber auch leistungselektronische Komponenten umfassen und/oder eine Mikroprozessorsteuerung umfassen. Weiterhin ist die Integration des Antriebsmotors 26 in das Schutzgehäuse 51 exemplarisch zu verstehen, das heißt die Kupplungssteuervorrichtung 50 könnte auch als eine separate, beispielsweise an einen Antriebsmotor anzubauende oder an eine sonstige Stelle einer Anhängekupplung zu montierende Baueinheit sein.

In Figur 4 ist ein weiteres Konzept angedeutet, bei dem in einem gemeinsamen Gehäuse 151 sowohl eine Kupplungssteuervorrichtung 150 als auch Antriebsmotoren 126 und 128 angeordnet sind, die durch die Kupplungssteuervorrichtung 150 steuerbar sind. Exemplarisch ist angedeutet, dass die Kupplungssteuervorrichtung 150, die ähnlich aufgebaut sein kann wie die Kupplungssteuervorrichtung 50, beispielsweise eine Bordnetzschnittstelle 152 aufweist, die ähnliche Teile wie die Bordnetzschnittstelle 52 hat. Bevorzugt umfasst die Kupplungssteuervorrichtung 150 beispielsweise einen Mikroprozessor 77 und eine Leistungselektronik 78, um Schaltmittel 160 zu realisieren, mit denen sie erste und zweite Lastausgangsanschlüsse 154 und 156 zur Ansteuerung der Antriebsmotoren 126 und 128 anhand einer Stromversorgung über Lasteingangsanschlüsse 153 der Bordnetzschnittstelle 152 ansteuert, z.B. beispielsweise anhand einer Stromversorgung durch das Fahrzeug-Steuergerät 95.

## Patentansprüche

1. Kupplungssteuervorrichtung zur Steuerung einer Antriebsanordnung einer Anhängekupplung (10) für ein Fahrzeug (90), wobei die Anhängekupplung (10) ein an einem Kuppelträger (18) angeordnetes Kuppelelement (19) zum Ankuppeln eines Anhängers (80) aufweist, wobei die Kupplungssteuervorrichtung (50; 150) eine elektrische Motor-Ausgangslastanschlussanordnung (55) zur elektrischen Stromversorgung der Antriebsanordnung der Anhängekupplung (10) aufweist, und wobei die Kupplungssteuervorrichtung (50; 150) eine Bordnetzschnittstelle (52) zur Verbindung mit einem Bordnetz (93) des Fahrzeugs (90), insbesondere mit einem Fahrzeug-Steuergerät (95) des Fahrzeugs (90), aufweist, wobei die Bordnetzschnittstelle (52) elektrische Einzelmotor-Lasteingangsanschlüsse (53) zum Anschluss von zur elektrischen Stromversorgung und Steuerung eines einzelnen Antriebsmotors vorgesehenen Leitungen des Bordnetzes (93) des Fahrzeugs (90) aufweist, **dadurch gekennzeichnet dass** die Motor-Ausgangslastanschlussanordnung (55) erste und zweite elektrische Lastausgangsanschlüsse (54, 56) zum Anschluss eines ersten und eines zweiten elektrischen Antriebsmotors (26, 28) der Antriebsanordnung der Anhängekupplung (10) an die Kupplungssteuervorrichtung (50; 150) umfasst, und dass sie Schaltmittel (60) zur simultanen und/oder sequentiellen elektrischen Verbindung der ersten und der zweiten elektrischen Lastausgangsanschlüsse (54, 56) mit den Einzelmotor-Lasteingangsanschlüssen (53) aufweist.

2. Kupplungssteuervorrichtung nach Anspruch 1, **dadurch gekennzeichnet, dass** die Schaltmittel (60) zur Verbindung der ersten elektrischen Lastausgangsanschlüsse (54) und der zweiten elektrischen Lastausgangsanschlüsse (56) mit den Einzelmotor-Lasteingangsanschlüssen (53) in einer Abfolge ausgestaltet sind, so in einer ersten Phase nur die ersten elektrischen Lastausgangsanschlüsse (54) mit den Einzelmotor-Lasteingangsanschlüssen (53) verbunden sind, und in einer zweiten Phase die ersten und die zweiten elektrischen Lastausgangsanschlüsse (54, 56) simultan mit den Einzelmotor-Lasteingangsanschlüssen (53) verbunden sind.

3. Kupplungssteuervorrichtung nach Anspruch 2, **dadurch gekennzeichnet, dass** die Schaltmittel (60) zur Verbindung der ersten elektrischen Lastausgangsanschlüsse (54) und der zweiten elektrischen Lastausgangsanschlüsse (56) mit den Einzelmotor-Lasteingangsanschlüssen (53) in einer Abfolge ausgestaltet sind, dass in einer dritten Phase nur die zweiten elektrischen Lastausgangsanschlüsse (56) mit den Einzelmotor-Lasteingangsanschlüssen (53) verbunden sind.

4. Kupplungssteuervorrichtung nach einem der vorhergehenden Ansprüche, **dadurch gekennzeichnet, dass** die Schaltmittel (60) einen Umschalter (61) zur sequenziellen Verbindung der ersten elektrischen Lastausgangsanschlüsse (54) und der zweiten elektrischen Lastausgangsanschlüsse (56) mit den Einzelmotor-Lasteingangsanschlüssen (53), so dass der erste und der zweite Antriebsmotor (26, 28) nacheinander mit den Einzelmotor-Lasteingangsanschlüssen (53) verbunden sind.

5. Kupplungssteuervorrichtung nach Anspruch 4, **dadurch gekennzeichnet, dass** der Umschalter (61) einen elektromechanischen und/oder elektronischen Umschalter (61) zur zweipoligen Verbindung der ersten elektrischen Lastausgangsanschlüsse (54) und der zweiten elektrischen Lastausgangsanschlüsse (56) mit den Einzelmotor-Lasteingangsanschlüssen (53) umfasst.

6. Kupplungssteuervorrichtung nach einem der vorhergehenden Ansprüche, **dadurch gekennzeichnet, dass** die Schaltmittel (60) mindestens einen Steuereingang (67) und/oder mindestens einen Sensorschalter (65) aufweist, über den die Schaltmittel (60) zum Schalten der Verbindung zwischen den Einzelmotor-Lasteingangsanschlüssen (53) und den ersten elektrischen Lastausgangsanschlüssen (54) und den zweiten elektrischen Lastausgangsanschlüssen (56) schaltbar sind.

7. Kupplungssteuervorrichtung nach Anspruch 6, **dadurch gekennzeichnet, dass** der mindestens eine Sensorschalter (65) durch den ersten oder zweiten Antriebsmotor (26, 28) oder ein durch den jeweiligen Antriebsmotor (26, 28) antreibbares Bauteil betätigbar ist und/oder der mindestens eine Sensorschalter (65) einen Bestandteil des ersten oder zweiten Antriebsmotors (26, 28) bildet.

8. Kupplungssteuervorrichtung nach einem der vorhergehenden Ansprüche, **dadurch gekennzeichnet, dass** sie Simulationsmittel (76) zur Simulation einer elektrischen Last, die von der durch den ersten und den zweiten Antriebsmotor (26, 28) verursachten Last abweicht, an den Einzelmotor-Lasteingangsanschlüssen (53) aufweist.

9. Kupplungssteuervorrichtung nach einem der vorhergehenden Ansprüche, **dadurch gekennzeichnet, dass** sie einen elektrischen Pufferspeicher (75) zur elektrischen Stromversorgung der ersten oder zweiten Lastausgangsanschlüsse (54, 56) aufweist, während die jeweils anderen, zweiten oder ersten, Lastausgangsanschlüsse (54, 56) mit den Einzelmotor-Lasteingangsanschlüssen (53) verbunden sind.

10. Kupplungssteuervorrichtung nach einem der vorhergehenden Ansprüche, **dadurch gekennzeichnet, dass** sie ein Schutzgehäuse (51; 151) zum Schutz gegenüber Umwelteinflüssen bei einer Anordnung in einem Außenbereich des Fahrzeugs (90) aufweist.

11. Kupplungssteuervorrichtung nach einem der vorhergehenden Ansprüche, **dadurch gekennzeichnet, dass** sie einen Bestandteil mindestens eines Antriebsmotors (26, 28), insbesondere eines Entriegelungs-Antriebsmotors (26), der Anhängekupplung (10) bildet, insbesondere in dessen Gehäuse (51) angeordnet ist.

12. Kupplungssteuervorrichtung nach einem der vorhergehenden Ansprüche, **dadurch gekennzeichnet, dass** der erste und der zweite Antriebsmotor (26, 28) in einem gemeinsamen Gehäuse (151) angeordnet sind.

13. Kupplungssteuervorrichtung nach einem der vorhergehenden Ansprüche, **dadurch gekennzeichnet, dass** der erste Antriebsmotor (26) einen Bestandteil einer Verriegelungseinrichtung (21) zum Verriegeln des Kuppelträgers (18) in zumindest einer Stellung, insbesondere einer zum Ankuppeln des Anhängers (80) vorgesehen Gebrauchsstellung (G), bildet, wobei die Verriegelungseinrichtung (21) durch den ersten Antriebsmotor (26) in eine Verriegelungsstellung und/oder eine Entriegelungsstellung verstellbar ist, und/oder der zweite Antriebsmotor (28) zum Verstellen des Kuppelelements (19) zwischen einer zum Anhängen des Anhängers (80) vorgesehenen Gebrauchsstellung (G) und einer Nichtgebrauchsstellung (N) vorgesehen ist, in der das Kuppelelement (19) weniger weit vor ein Heck des Fahrzeugs (90) vorsteht als in der Gebrauchsstellung (G).

14. Kupplungssteuervorrichtung nach einem der vorhergehenden Ansprüche, **dadurch gekennzeichnet, dass** sie einen Bestandteil eines Systems bildet, das das Fahrzeug-Steuergerät (95) umfasst, wobei das Fahrzeug-Steuergerät (95) eine Stromüberwachungseinrichtung (102) zur Überwachung eines Stromflusses zu den Einzelmotor-Lasteingangsanschlüssen (53) aufweist, bei Stromfluss-Kennwerte (106) und/oder eine Stromfluss-Kennlinie für den Stromfluss bei einer Ansteuerung des ersten und dem zweiten Antriebsmotors (28) durch die Kupplungssteuervorrichtung (50; 150) gespeichert sind.

15. Anhängekupplung (10) mit einer Kupplungssteuervorrichtung (50; 150) nach einem der vorhergehenden Ansprüche.

## Claims

1. Coupling control device for controlling a drive assembly of a trailer coupling (10) for a vehicle (90), wherein the trailer coupling (10) has a coupling element (19) fitted to a coupling support (18) for coupling a trailer (80), wherein the coupling control device (50; 150) has an electrical motor output load connection arrangement (55) for the electrical power supply to the drive assembly of the trailer coupling (10), and wherein the coupling control device (50; 150) has a vehicle electrical system interface (52) for connection to a vehicle electrical system (93) of the vehicle (90), in particular to a vehicle control unit (95) of the vehicle (90), wherein the vehicle electrical system interface (52) has electrical individual motor load input connections (53) for the connection of cables of the vehicle electrical system (93) of the vehicle (90) provided for the electrical power supply and control of an individual drive motor, **characterised in that** the motor output load connection arrangement (55) includes first and second electrical load output connections (54, 56) for the connection of a first and second electrical drive motor (26, 28) of the drive assembly of the trailer coupling (10) to the coupling control device (50; 150), and that it has switching means (60) for the simultaneous and/or sequential electrical connection of the first and second electrical load output connections (54, 56) to the individual motor load input connections (53).

2. Coupling control device according to claim 1, **characterised in that** the switching means (60) for connection of the first electrical load output connections (54) and the second electrical load output connections (56) to the individual motor load input connections (53) are organised in a sequence such that in a first phase only the first electrical load output connections (54) are connected to the individual motor load input connections (53), and in a second phase the first and second electrical load output connections (54, 56) are connected simultaneously to the individual motor load input connections (53).

3. Coupling control device according to claim 2, **characterised in that** the switching means (60) for connection of the first electrical load output connections (54) and the second electrical load output connections (56) to the individual motor load input connections (53) are organised in a sequence such that in a third phase only the second electrical load output connections (56) are connected to the individual motor load input connections (53).

4. Coupling control device according to any of the preceding claims, **characterised in that** the switching means (60) have a changeover switch (61) for the sequential connection of the first electrical load output connections (54) and the second electrical load output connections (56) to the individual motor load input connections (53), so that the first and second drive motors (26, 28) are connected consecutively to the individual motor load input connections (53).

5. Coupling control device according to claim 4, **characterised in that** the changeover switch (61) includes an electro-mechanical and/or electronic changeover switch (61) for double-pole connection of the first electrical load output connections (54) and the second electrical load output connections (56) to the individual motor load input connections (53).

6. Coupling control device according to any of the preceding claims, **characterised in that** the switching means (60) have at least one control input (67) and/or at least one sensor switch (65), through which the switching means (60) may be operated to switch the connection between the individual motor load input connections (53) and the first electrical load output connections (54) and the second electrical load output connections (56).

7. Coupling control device according to claim 6, **characterised in that** the sensor switch or switches (65) may be actuated by the first or second drive motor (26, 28) or a component drivable by the respective drive motor (26, 28), and/or the sensor switch or switches (65) form an integral part of the first or second drive motor (26, 28).

8. Coupling control device according to any of the preceding claims, **characterised in that** it has simulation means (76) for simulating an electrical load at the individual motor load input connections (53) which deviates from the load generated by the first and second drive motors (26, 28).

9. Coupling control device according to any of the preceding claims, **characterised in that** it has an electrical buffer store (75) for the electrical power supply of the first or second load output connections (54, 56), while the other respective, second or first, load output connections (56, 54) are connected to the individual motor load input connections (53).

10. Coupling control device according to any of the preceding claims, **characterised in that** it has a protective casing (51; 151) for protection against environmental influences when mounted in an outside part of the vehicle (90).

11. Coupling control device according to any of the preceding claims, **characterised in that** it forms an integral part of at least one drive motor (26, 28), in particular an unlocking drive motor (26), of the trailer coupling (10), in particular located in its casing (51).

12. Coupling control device according to any of the preceding claims, **characterised in that** the first and second drive motors (26, 28) are provided in a common casing (151).

13. Coupling control device according to any of the preceding claims, **characterised in that** the first drive motor (26) forms an integral part of a locking device (21) for locking the coupling support (18) in at least one position, in particular a position of use (G) provided for coupling-on the trailer (80), wherein the locking device (21) may be adjusted by the first drive motor (26) into a locking position and/or an unlocking position, and/or the second drive motor (28) is provided to adjust the coupling element (19) between a position of use (G) provided for attaching the trailer (80) and an inoperative position (N) in which the coupling element (19) protrudes less far beyond the rear of the vehicle (90) than in the position of use (G).

14. Coupling control device according to any of the preceding claims, **characterised in that** it forms an integral part of a system which includes the vehicle control unit (95), wherein the vehicle control unit (95) has a current monitoring device (102) for monitoring a current flow to the individual motor load input connections (53) and in which current flow parameters (106) and/or a current flow curve for the current flow involved in activation of the first and second drive motors (28) by the coupling control device (50; 150) are stored.

15. Trailer coupling (10) with a coupling control device (50; 150) according to any of the preceding claims.

## Revendications

1. Dispositif de commande d'attelage pour la commande d'un agencement d'entraînement d'un attelage (10) pour un véhicule (90), l'attelage (10) présentant un élément d'attelage (19) agencé sur un support d'attelage (18) pour l'attelage d'une remorque (80), le dispositif de commande d'attelage (50 ; 150) présentant un agencement de raccordement de charge de sortie de moteur (55) électrique pour l'alimentation électrique de l'agencement d'entraînement de l'attelage (10), et le dispositif de commande d'attelage (50 ; 150) présentant une interface de réseau de bord (52) pour la liaison avec un réseau de bord (93) du véhicule (90), en particulier avec un appareil de commande de véhicule (95) du véhicule (90), l'interface de réseau de bord (52) présentant des raccords d'entrée de charge de moteur individuel (53) électriques pour le raccordement de câbles prévus pour l'alimentation électrique et la commande d'un moteur d'entraînement individuel du réseau de bord (93) du véhicule (90), **caractérisé en ce que** l'agencement de raccordement de charge de sortie de moteur (55) comporte des premiers et des seconds raccords de sortie de charge (54, 56) électriques pour le raccordement d'un premier et d'un second moteur d'entraînement (26, 28) électrique de l'agencement d'entraînement de l'attelage (10) au dispositif de commande d'attelage (50 ; 150), et qu'il présente des moyens de commutation (60) pour la liaison électrique simultanée et/ou séquentielle des premiers et des seconds raccords de sortie de charge (54, 56) électriques avec les raccords d'entrée de charge de moteur individuel (53).

2. Dispositif de commande d'attelage selon la revendication 1, **caractérisé en ce que** les moyens de commutation (60) sont configurés pour la liaison des premiers raccords de sortie de charge (54) électriques et des seconds raccords de sortie de charge (56) électriques avec les raccords d'entrée de charge de moteur individuel (53) dans une suite, dans laquelle, dans une première phase, seuls les premiers raccords de sortie de charge (54) électriques sont reliés aux raccords d'entrée de charge de moteur individuel (53) et, dans une seconde phase, les premiers et les seconds raccords de sortie de charge électriques (54, 56) sont reliés simultanément aux raccords d'entrée de charge de moteur individuel (53).

3. Dispositif de commande d'attelage selon la revendication 2, **caractérisé en ce que** les moyens de commutation (60) sont configurés pour la liaison des premiers raccords de sortie de charge (54) électriques et des seconds raccords de sortie de charge (56) électriques avec les raccords d'entrée de charge de moteur individuel (53) dans une suite, dans laquelle, dans une troisième phase, seuls les seconds raccords de sortie de charge (56) électriques sont reliés aux raccords d'entrée de charge de moteur individuel (53).

4. Dispositif de commande d'attelage selon l'une quelconque des revendications précédentes, **caractérisé en ce que** les moyens de commutation (60) comportent un commutateur (61) pour la liaison séquentielle des premiers raccords de sortie de charge (54) électriques et des seconds raccords de sortie de charge (56) électriques avec les raccords d'entrée de charge de moteur individuel (53) de sorte que le premier et le second moteur d'entraînement (26, 28) soient reliés l'un après l'autre aux raccords d'entrée de charge de moteur individuel (53).

5. Dispositif de commande d'attelage selon la revendication 4, **caractérisé en ce que** le commutateur (61) comporte un commutateur (61) électromécanique et/ou électronique pour la liaison bipolaire des premiers raccords de sortie de charge (54) électriques et des seconds raccords de sortie de charge (56) électriques avec les raccords d'entrée de charge de moteur individuel (53).

6. Dispositif de commande d'attelage selon l'une quelconque des revendications précédentes, **caractérisé en ce que** les moyens de commutation (60) présentent au moins une entrée de commande (67) et/ou au moins un commutateur de capteur (65), par lequel les moyens de commutation (60) peuvent être commutés pour la commutation de la liaison entre les raccords d'entrée de charge de moteur individuel (53) et les premiers raccords de sortie de charge (54) électriques et les seconds raccords de sortie de charge (56) électriques.

7. Dispositif de commande d'attelage selon la revendication 6, **caractérisé en ce que** l'au moins un commutateur de capteur (65) peut être actionné par le premier ou second moteur d'entraînement (26, 28) ou un composant entraînable par le moteur d'entraînement (26, 28) respectif et/ou l'au moins un commutateur de capteur (65) forme un élément du premier ou second moteur d'entraînement (26, 28).

8. Dispositif de commande d'attelage selon l'une quelconque des revendications précédentes, **caractérisé en ce qu'**il présente des moyens de simulation (76) pour la simulation d'une charge électrique, qui diverge de la charge causée par le premier et le second moteur d'entraînement (26, 28), au niveau des raccords d'entrée de charge de moteur individuel (53).

9. Dispositif de commande d'attelage selon l'une quelconque des revendications précédentes, **caractérisé en ce qu'**il présente un accumulateur intermédiaire (75) électrique pour l'alimentation électrique des premiers ou seconds raccords de sortie de charge (54, 56) alors que les respectivement autres, seconds ou premiers, raccords de sortie de charge (54, 56) sont reliés aux raccords d'entrée de charge de moteur individuel (53).

10. Dispositif de commande d'attelage selon l'une quelconque des revendications précédentes, **caractérisé en ce qu'**il présente un boîtier de protection (51 ; 151) pour la protection par rapport aux influences environnementales pour un agencement dans une zone extérieure du véhicule (90).

11. Dispositif de commande d'attelage selon l'une quelconque des revendications précédentes, **caractérisé en ce qu'**il forme un élément au moins d'un moteur d'entraînement (26, 28), en particulier d'un moteur d'entraînement de déverrouillage (26), de l'attelage (10), en particulier dans son boîtier (51).

12. Dispositif de commande d'attelage selon l'une quelconque des revendications précédentes, **caractérisé en ce que** le premier et le second moteur d'entraînement (26, 28) sont agencés dans un boîtier commun (151).

13. Dispositif de commande d'attelage selon l'une quelconque des revendications précédentes, **caractérisé en ce que** le premier moteur d'entraînement (26) forme un élément d'un dispositif de verrouillage (21) pour le verrouillage du support d'attelage (18) dans au moins une position, en particulier une position d'utilisation (G) prévue pour l'attelage de la remorque (80), le dispositif de verrouillage (21) étant réglable par le premier moteur d'entraînement (26) dans une position de verrouillage et/ou une position de déverrouillage, et/ou le second moteur d'entraînement (28) est prévu pour le réglage de l'élément d'attelage (19) entre une position d'utilisation (G) prévue pour l'attelage de la remorque (80) et une position de non-utilisation (N), dans laquelle l'élément d'attelage (19) dépasse moins d'une partie arrière du véhicule (90) que dans la position d'utilisation (G).

14. Dispositif de commande d'attelage selon l'une quelconque des revendications précédentes, **caractérisé en ce qu'**il forme un élément d'un système qui comporte l'appareil de commande de véhicule (95), l'appareil de commande de véhicule (95) présentant un dispositif de surveillance de courant (102) pour la surveillance d'un flux de courant aux raccords d'entrée de charge de moteur individuel (53), des valeurs caractéristiques de flux de courant (106) et/ou une ligne caractéristique de flux de courant pour le flux de courant étant enregistrées en cas d'une commande du premier et du second moteur d'entraînement (28) par le dispositif de commande d'attelage (50 ; 150).

15. Attelage (10) avec un dispositif de commande d'attelage (50 ; 150) selon l'une quelconque des revendications précédentes.
